(19) Europäisches Patentamt
European Patent Office
Office européen des brevets

(11) **EP 1 386 076 B1**

(12) **EUROPÄISCHE PATENTSCHRIFT**

(45) Veröffentlichungstag und Bekanntmachung des Hinweises auf die Patenterteilung:
**15.07.2009   Patentblatt 2009/29**

(51) Int Cl.:
**F03B 1/02** *(2006.01)*

(21) Anmeldenummer: 02722201.7

(22) Anmeldetag: **11.03.2002**

(86) Internationale Anmeldenummer:
**PCT/EP2002/002642**

(87) Internationale Veröffentlichungsnummer:
**WO 2002/093004 (21.11.2002 Gazette 2002/47)**

(54) **PELTONSCHAUFEL**

PELTON BUCKET

AUGE PELTON

(84) Benannte Vertragsstaaten:
**AT BE CH CY DE DK ES FI FR GB GR IE IT LI LU MC NL PT SE TR**

(30) Priorität: **11.05.2001   EP 01111517**

(43) Veröffentlichungstag der Anmeldung:
**04.02.2004   Patentblatt 2004/06**

(73) Patentinhaber: **VA TECH HYDRO GmbH 1141 Wien (AT)**

(72) Erfinder:
• **GEPPERT, Lothar 8038 Zürich (CH)**

• **SCHÄRER, Christoph CH-8330 Pfäffikon (CH)**

(74) Vertreter: **Schweinzer, Friedrich et al Andritz AG Stattegger Strasse 18 8045 Graz (AT)**

(56) Entgegenhaltungen:
**DE-A- 3 938 356**

• **PATENT ABSTRACTS OF JAPAN vol. 007, no. 092 (M-208), 16. April 1983 (1983-04-16) & JP 58 015764 A (FUJI DENKI SEIZO KK), 29. Januar 1983 (1983-01-29)**

**Beschreibung**

Die Erfindung betrifft eine Peltonschaufel eines Peltonlaufrades, sowie ein Verfahren zur Herstellung einer Peltonschaufel.

Peltonlaufräder sind beispielsweise aus der DE-A-39 38 356 bekannt.

Peltonschaufeln wurden bisher mit ebenen Austrittskanten gefertigt. Bevorzugt bei kleinen Strahlkreisverhältnissen, d.h. wenn die Schaufeln auf einen sehr kleinen Strahlkreisdurchmesser zusammenrücken müssen, wurden die Austrittskanten oft lediglich an der Becherwurzel nach unten abgeschrägt, da ansonsten an der Becherwurzel zwischen den Peltonschaufeln zuwenig Platz für das abzufließende Wasser bleibt, wodurch der

Umlenkwinkel des Strahles verkleinert wird. Durch die ebenen Austrittskanten verringern sich zwangsweise die Lichtweiten zwischen aufeinanderfolgenden Schaufeln, wodurch weniger Platz für das abfließende Wasser bleibt. Außerdem wird dadurch die für die Umlenkung notwendige Bahnlänge unnötigerweise verlängert. Alle diese Nachteile wirken sich negativ auf den Wirkungsgrad der Peltonturbine aus.

Die vorliegende Erfindung hat sich deshalb die Aufgabe gestellt, die Umlenkung des Strahles durch eine besonders geformte Schaufel zu optimieren und somit den Wirkungsgrad der Peltonturbine zu verbessern.

Die gestellte Aufgabe wird für die Peltonschaufel und das Verfahren zur Herstellung einer Peltonschaufel erfindungsgemäß dadurch gelöst, dass die Austrittskante der Peltonschaufel des Peltonlaufrades zumindest abschnittsweise konkav gekrümmt ist.

Durch diese Form der Austrittskante wird die kinetische Energie des Strahles während der Führung in der Peltonschaufel optimal ausgenutzt und auf das Peltonrad übertragen, womit man eine Verbesserung des Wirkungsgrades der Peltonturbine erzielt. Insgesamt kann dadurch ein Wirkungsgradgewinn von 0.3 bis 0.4 % erzielt werden, was bei gängigen Leistungen von einigen hundert MW bei Peltonturbinen einen beachtlichen Gewinn bedeutet. Diese besondere Form ergibt sich aus einer Optimierung der Umlenkung des Strahles und gewährleistet, dass der Strahl nicht über die für die saubere Umlenkung nötige Bahnlänge hinaus geführt wird.

Darüber hinaus kann der Austrittswinkel der Peltonschaufel durch diese Form weiter geschlossen werden, was sich ebenfalls günstig auf den Wirkungsgrad der Peltonturbine auswirkt.

Durch die Absenkung der Austrittskante in Bereich der Bechermitte wird als zusätzlicher Effekt, mehr Platz für das vom vorlaufenden Becher vorbeifließende Wasser geschaffen, es ergibt sich also eine Vergrößerung der Lichtweite. Als direkte Konsequenz daraus, können zur Beibehaltung der optimalen Lichtweiten die Austrittswinkel der Peltonschaufel in diesem Bereich weiter geschlossen werden, was sich wiederum günstig auf den Wirkungsgrad der Peltonturbine auswirkt.

In einer vorteilhaften Ausführung ist die Austrittskante der Peltonschaufel im Bereich der Becherwurzel gegenüber einer ebenen Austrittskante angehoben, wodurch sich die Umlenkwinkel des Strahles vergrößern lassen, was sich nach dem Impulssatz positiv auf den Wirkungsgrad einer Peltonturbine auswirkt. Bei kleinen Strahlkreisverhältnissen $D_1/B_2$, $D_1/B_2 < 3.3$, sollte gleichzeitig mit dem Hochziehen der Austrittskante im Bereich der Becherwurzel der Öffnungswinkel an der Austrittskante in diesem Bereich vergrößert werden, um zu vermeiden, dass der abfließende Strahl zu stark an der nachfolgenden Schaufel streift. Durch die längere Führung des Strahles in der Schaufel ergibt sich insbesondere ein Wirkungsgradgewinn.

Eine weitere vorteilhafte Ausführungsform erhält man, wenn die Austrittskante im Bereich der Schaufelstirn gegenüber einer ebenen Austrittskante angehoben wird, was zusätzlich Spielraum beim Optimieren der Form der Peltonschaufel lässt.

Um möglichst fließende Übergänge der Schaufelform sicherzustellen ist die Austrittskante, bezüglich einer Radialebene des Peltonlaufrades, vorteilhaft zumindest abschnittsweise konvex, gekrümmt. Dadurch kann der Strahl übergehend und ohne unnötige Verluste in der Peltonschaufel umgelenkt werden und aus der Peltonschaufel austreten.

Alternativ dazu, kann eine Vereinfachung in der Herstellung einer erfindungsgemäßen Peltonschaufel erzielt werden, wenn die konkav und/oder konvex gekrümmte Form zumindest abschnittsweise durch einen Polygonzug angenähert wird.

Der Wirkungsgrad der Peltonturbine wird positiv beeinflusst, wenn der Abströmwinkel des Strahles an der Peltonschaufel durch die Form der Austrittskante so eingestellt wird, dass die radiale Komponente der Austrittsgeschwindigkeit des Strahles minimal wird.

Eine zusätzliche Verbesserung des Wirkungsgrades kann erzielt werden, wenn der Abströmwinkel des Strahles an der Peltonschaufel durch die Form der Austrittskante so eingestellt wird, dass die Umlenkung des Strahles zumindest teilweise bezüglich 180° maximiert wird.

Der Wirkungsgrad kann dadurch noch weiter verbessert werden, dass der Abströmwinkel an der Peltonschaufel so eingestellt wird, dass der Strahl beim Austritt aus der Peltonschaufel nur teilweise an der nachfolgenden Peltonschaufel streift.

Gute Optimierungsergebnisse lassen sich erzielen, wenn der Austrittswinkelverlauf zuerst berechnet wird, beispielsweise anhand von numerischen, fluiddynamischen und/oder mathematischen Modellen, und die Feinabstimmung in Modellversuchen durchgeführt wird.

Die Erfindung wird anhand der schematischen, beispielhaften und nicht einschränkenden Figuren 1 bis 4 beschrieben. Die Figuren 1 bis 4 zeigen dabei:

Fig. 1 Die Abströmung des Strahles an einer Peltonschaufel mit ebener Austrittskante.

Fig. 2 Ein Vergleich einer Peltonschaufel mit ebener Austrittskante mit erfindungsgemäßen Peltonschaufeln.

Fig. 3 Die Abströmung des Strahles an einer erfindungsgemäßen Peltonschaufel.

Fig. 4 Eine Draufsicht auf eine erfindungsgemäße Peltonschaufel.

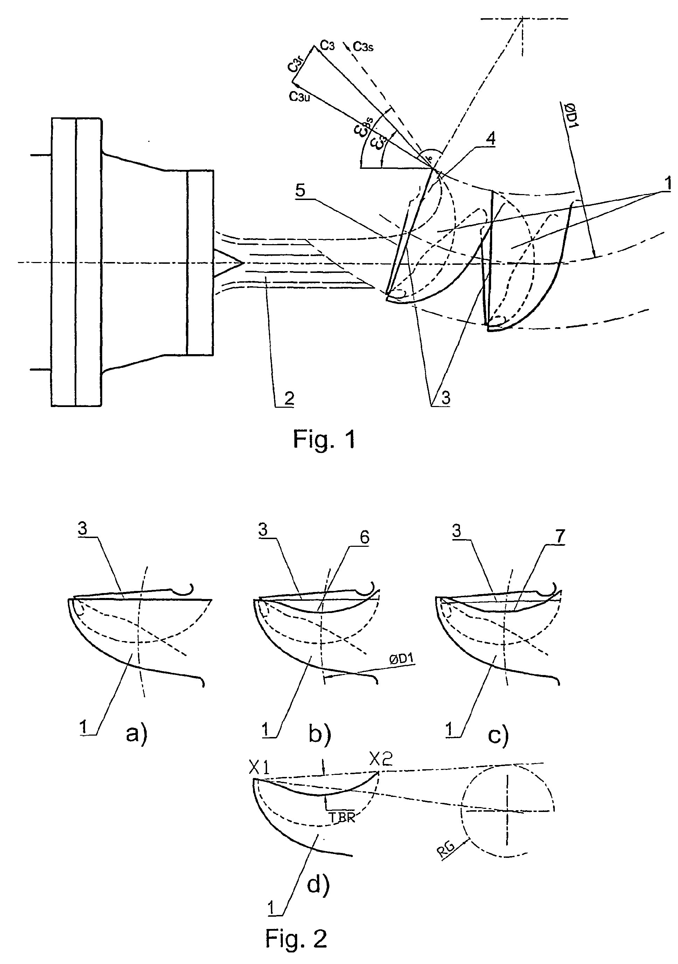

Eine Peltonturbine läuft in einem Gehäuse um eine Drehachse um und wird mit einem Medium, meistens Wasser, aus einer Druckrohrleitung über einen Strahl 2, oder gleichzeitig durch mehrere Strahlen, tangential zu einem mittleren Strahlkreisdurchmesser $D_1$ beaufschlagt. Das sich translatorisch bewegende Medium tritt durch einen Ausschnitt in der Schaufelstirn in die rotierende Peltonschaufel 1 ein, wird an der Schaufelschneide 5 zweigeteilt, in den beiden Bechern der Peltonschaufel 1 umgelenkt und verlässt die Peltonschaufel 1 zu beiden Seiten über den äußeren Schaufelrand, wie in Fig. 1 und Fig. 2 schematisch dargestellt.

Nach dem Imputssatz, ergibt sich die Kraft F auf eine stehende Peltonschaufel 1 zu

$$F = \left(1 + \cos \varepsilon_3\right)\rho A c^2.$$

Dabei ist $\varepsilon_3$ der Abströmwinkel in Bezug zur Eintrittsachse des Strahles 2, $\rho$ ist die Dichte des Mediums, $c$ die Strahlgeschwindigkeit und $A$ der Strahlquerschnitt. Wie aus der Beziehung für die Kraft ersichtlich, wird die Kraft maximal, wenn $\varepsilon_3$ gegen Null geht, d.h. wenn das Medium um 180° umgelenkt wird. Da sich das Peltonrad mit den Peltonschaufeln 1 dreht, ergeben sich bei herkömmlichen Peltonrädern, also mit ebener Austrittskante 3, Umlenkwinkeln bezüglich der Eintrittsachse des Strahles 2 zwischen etwa 130° bis phasenweise fast 180°.

Nach der Eulerschen Turbinengleichung,

$$P = \rho Q \left(u_3 c_{3u} - u_0 c_{0u}\right),$$

ist die Leistung P einer Peltonturbine dann maximal, wenn das Medium in Umfangsrichtung (Index u) vom Laufrad abströmt, wenn also keine radiale Komponente (Index r) der Strahlgeschwindigkeit $c$ vorhanden ist und gilt

$$c_{3r} = 0 \quad \Rightarrow \quad c_3 = c_{3u}.$$

$\rho$ bezeichnet dabei wieder die Dichte des Mediums, $Q$ den Volumenstrom und $u$ die Umfangsgeschwindigkeit der Schaufel. Der Index 0 bezieht sich auf den Eintritt des Strahles in die Peltonschaufel 1 und der Index 3 auf den Austritt aus der Peltonschaufel 1.

Für einen optimalen Betrieb einer Peltonturbine sollten also die Umlenkwinkel während der gesamten Umlenkphase bezüglich 180° maximiert werden und gleichzeitig die Austrittsgeschwindigkeit $c_3$ nur eine Umfangskomponente $c_{3u}$ aufweisen.

In Fig. 1 ist ein Peltonrad mit zwei herkömmlichen Peltonschaufeln 1 angedeutet, das durch einen Strahl 2 beaufschlagt wird. Der Strahl 2 wird an der Schaufelschneide 5 zweigeteilt, wird in den Bechern umgelenkt und tritt mit dem Abströmwinkel $\varepsilon_3$ aus der Peltonschaufel 1 aus. Bei herkömmlichen Peltonschaufeln beträgt der Abströmwinkel $\varepsilon_3$ ungefähr 40° bis 50°. Aufgrund des durch die ebene Austrittskante 3 bedingten Austrittswinkelverlaufes resultiert eine Austrittsgeschwindigkeit $c_3$, die eine radiale Komponente $c_{3r}$ aufweist, mit den aus obigen Ausführungen bekannten Nachteilen. Um zu vermeiden, dass das abfließende Wasser zu stark an der nachfolgenden Peltonschaufel 1 streift, was sich negativ auf die Leistung der Peltonturbine auswirken würde, wird oft im Bereich der Becherwurzel eine abgeschrägt Austrittkante 4 vorgesehen. Dadurch streift das Wasser beim Austreten zwar weniger an der Außenseite der nachfolgenden Peltonschaufel 1, aber die Abströmwinkel $\varepsilon_{3S}$ vergrößern sich jedoch noch mehr und die resultierende Austrittsgeschwindigkeit $c_{3S}$ weist dadurch eine noch größere radiale Komponente auf. Aufgrund der obigen Ausführungen ist es direkt einsichtig, dass sich dadurch der Wirkungsgrad der Peltonturbine verschlechtert.

In Fig. 2, a) ist eine einzelne herkömmliche Peltonschaufel 1 mit einer ebenen Austrittskante 3 dargestellt. Dieser herkömmlichen Peltonschaufel 1, sind in Fig. 2, b) und c) erfindungsgemäße Peltonschaufeln 1 gegenübergestellt, in denen jeweils als Vergleich eine ebene Austrittskante 3 angedeutet ist. In Fig. 2, b) erkennt man, dass die Austrittskante 6 der erfindungsgemäßen Peltonschaufel eine konkave Krümmung aufweist. Unter einer konkaven Krümmung wird hier definitionsgemäß eine Krümmung verstanden, deren Krümmungsmittelpunkt in einer Seitenansicht der Peltonschaufel 1 nach Fig. 2, a) oberhalb der Austrittskante zu liegen kommt. Eine konvexe Austrittskante besitzt folglich einen Krümmungsmittelpunkt unterhalb der Austrittskante 6, also beispielsweise im Peltonschaufelkörper selbst. Die Austrittskante 6 ist weiters im Bereich der Bechermitte, also um den Strahlkreisdurchmesser $D_1$, gegenüber der ebenen Austrittskante 3 abgesenkt und im Bereich der Becherwurzel gegenüber der ebenen Austrittskante 3 angehoben ist, sodass sich im Summe eine verlaufende, konkav gekrümmte Austrittskante 6 ergibt. Insbesondere ergibt sich also bei diesem Ausführungsbeispiel bezüglich einer Radialebene des Peltonlaufrades eine Kontur, die an der Schaufelstirn eine verlaufende, konvex gekrümmte Form aufweist und dann bis zur Becherwurzel in eine verlaufende, konkav gekrümmte Form übergeht. Natürlich sind auch andere Formen denkbar und möglich. Diese Form ergibt sich aus einer Optimierung hinsichtlich der Minimierung der radialen Komponente $c_{3r}$ der Austrittsgeschwindigkeit $c_3$, vorteil-

haft $c_{3r}$ = 0. Als weiterer Faktor fließt in die Optimierung die Minimierung des Abströmwinkels $\varepsilon_3$, hinsichtlich eines bezüglich 180° maximalen Umlenkwinkels, und die für die saubere Umlenkung des Strahls 2 in der Peltonschaufel 1 nötige Bahnlänge ein.

Die Optimierung der gekrümmten Austrittskante wird anhand von Rechenmodellen, beispielsweise numerische, fluiddynamische oder mathematische Modelle, durchgeführt und in anschließenden Modellversuchen und/oder Simulationen verifiziert. Natürlich ist es auch möglich die Form nur durch Modellversuche zu optimieren. Dazu haben sich aus der Praxis folgende Wertebereiche als vorteilhaft erwiesen.

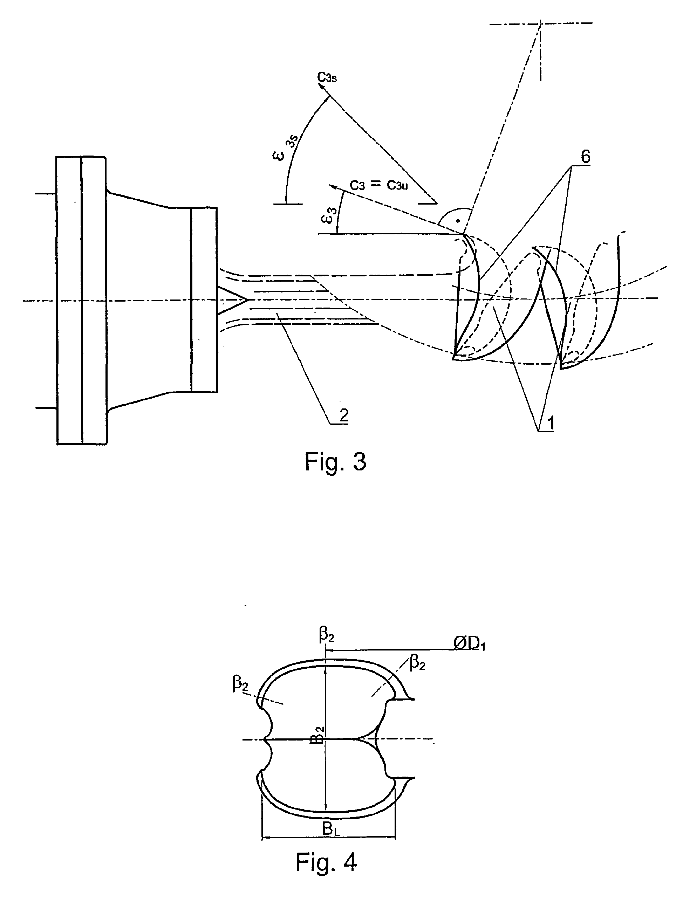

In Fig. 2, d) sind zwei Punkte X1 und X2 gezeigt, die sich aus dem Schnittpunkt der gekrümmten Austrittskante 6 mit der Innenfläche eines Bechers ergeben. Der Grundkreis mit dem Radius $R_G$ um die Peltonradachse ergibt sich dann als der Kreis, der mit der Verlängerung der Linie X1-X2 tangiert. Für Peltonräder soll, wie für Fachmänner bekannt, bei Strahlkreisverhältnissen $D_1/B_2 \approx 6$ der Radius $R_G$=(0.25 bis 0.85)$B_2$ betragen, bei $D_1/B_2 \approx 3$ beträgt der Radius $R_G$=(0.55 bis 1.2)$B_2$. Die Tiefe $T_{BR}$ der gekrümmten Austrittskante 6 im Bereich des Strahlkreisdurchmessers $D_1$ sollte dann im Bereich $T_{BR}$=(0.03 bis 0.17)$B_2$ liegen. $B_2$ bezeichnet dabei die Breite der Peltonschaufel 1, wie in Fig. 4 dargestellt.

In Fig. 2, c) wurde die gekrümmte Austrittskante durch einen Polygonzug 7 angenähert. Weiters erkennt man, dass zusätzlich noch die Austrittskante 7 im Bereich der Schaufelstirn gegenüber der ebenen Austrittskante 3 angehoben ist. Diese Anhebung ist natürlich auch bei gekrümmten Austrittskanten 6 möglich.

Fig. 3 zeigt ein Peltonrad, welches durch zwei Peltonschaufeln 1 mit konkav gekrümmter Austrittskante 6 angedeutet wird, das durch einen Strahl 2 beaufschlagt wird. Der aus der Umlenkung resultierende Abströmwinkel $\varepsilon_3$ ergibt sich in diesem Ausführungsbeispiel dermaßen, dass die radiale Komponente $c_{3r}$ der Austrittsgeschwindigkeit $c_3$ optimalerweise verschwindet und nur mehr die Umfangskomponente übrigbleibt, sodass gilt $c_3 = c_{3u}$. Als Vergleich ist die Austrittsgeschwindigkeit $c_{3S}$ einer herkömmlichen Peltonschaufel 1 angedeutet, die aufgrund des größeren Austrittswinkels $\varepsilon_{3S}$ eine radiale Komponente aufweist.

In Fig. 4 ist der Austrittswinkelverlauf über die Peltonschaufellänge $B_L$ an drei Stellen durch den jeweiligen Austrittswinkel $\beta_2$ angedeutet. Die Austrittswinkel $\beta_2$ werden so eingestellt, dass der umgelenkte Strahl nicht zu stark an der Außenfläche der nachfolgenden Peltonschaufel streift. Dabei existiert für jedes Strahlkreisverhältniss $D_1/B_2$ ein optimaler Austrittswinkelverlauf. Dieser Austrittswinkelverlauf kann anhand von numerischen, fluiddynamischen und/oder mathematischen Modellen berechnet und/oder simuliert werden, oder wird in Modellversuchen ermittelt. Natürlich kann auch eine beliebige Kombination der Verfahren zur Bestimmung des optimalen Austrittswinkelverlaufes angewendet werden.

**Patentansprüche**

1. Peltonschaufel (1) eines Peltonlaufrades, **dadurch gekennzeichnet, dass** die Austrittskante (6) des Peltonlaufrades zumindest abschnittsweise konkav gekrümmt ist, wobei die konkave Krümmung so definiert ist, dass deren Krümmungsmittelpunkt in einer Seitenansicht der Peltonschaufel (1) oberhalb der Austrittskante (6) zu liegen kommt.

2. Peltonschaufel (1) nach Anspruch 1, **dadurch gekennzeichnet, dass** die Austrittskante (6) der Peltonschaufel (1) im Bereich des mittleren Strahlkreisdurchmessers (D1) gegenüber einer ebenen Austrittskante (3) abgesenkt ist.

3. Peltonschaufel (1) nach Anspruch 1 oder 2, **dadurch gekennzeichnet, dass** die Austrittskante (6) der Peltonschaufel im Bereich der Becherwurzel gegenüber einer ebenen Austrittskante (3) angehoben ist.

4. Peltonsphaufel (1) nach Anspruch 1, 2 oder 3, **dadurch gekennzeichnet, dass** die Austrittskanter (6) der Peltonschaufel im Bereich der Schaufelstirn gegenüber einer ebenen Austrittskante (3) angehoben ist

5. Peltonschaufel (1) nach einem der Ansprüche 1 bis 4, **dadurch gekennzeichnet, dass** die Krümmung der Austrittkante (6) zumindest abschnittsweise konvex gekrümmt ist.

6. Peltonschaufel (1) nach einem der Ansprüche 1 bis 5, **dadurch gekennzeichnet, dass** die konkav und/oder die konvex gekrümmte Form zumindest abschnittsweise durch einen Polygonzug (7) angenähert ist.

7. Peltonschaufel (1) nach einem der Ansprüche 1 bis 6, **dadurch gekennzeichnet, dass** der Abströmwinkel ($\varepsilon_3$) des Strahles an der Peltonschaufel durch die Form der Austrittskante (6) so einstellbar ist, dass die radiale Komponente der Austrittsgeschwindigkeit ($C_{3r}$) des Strahles minimiert wird.

8. Peltonschaufel (1) nach einem der Ansprüche 1 bis 7, **dadurch gekennzeichnet, dass** der Abströmwinkel ($\varepsilon_3$) an der Peltonschaufel durch die Form der Austrittskante (6) so einstellbar ist, dass die Umlenkung des Strahles zumindest teilweise bezüglich 180° maximiert wird.

9. Peltonschaufel (1) nach einem der Ansprüche 1 bis 8, **dadurch gekennzeichnet, dass** der optimale Winkelverlauf der Strömung an der Austrittskante (6) anhand von numerischen, fluiddynamischen und/oder mathematischen Modellen berechenbar ist.

**10.** Peltonschaufel (1) nach einem der Ansprüche 1 bis 9, **dadurch gekennzeichnet, dass** der optimale Winkelverlauf der Strömung an der Austrittskante (6) in Modellversuchen bestimmbar ist.

**11.** Peltonschaufel (1) nach Anspruch 9 oder 10, **dadurch gekennzeichnet, dass** der Winkelverkauf der Strömung an der Austrittskante (6) an der Peltonschaufel so einstellbar ist, dass der Strahl beim Austritt aus der Peltonschaufel zumindest nur teilweise an der nachfolgenden Peltonschaufel streift.

**12.** Verfahren zur Herstellung einer Peltonschaufel (1), **dadurch gekennzeichnet, dass** die Austrittskante (6) der Peltonschaufel (1) zumindest abschnittsweise konkav gekrümmt ausgeführt wird.

**13.** Verfahren nach Anspruch 12, **dadurch gekennzeichnet, dass** die Austrittskante (6) im Bereich des mittleren Strahlkreisdurchmessers ($D_1$) gegenüber einer ebenen Austrittskante (3) abgesenkt wird.

**14.** Verfahren nach Anspruch 12 oder 13, **dadurch gekennzeichnet, dass** die Austrittskante (6) im Bereich der Becherwurzel gegenüber einer ebenen Austrittskante (3) angehoben wird.

**15.** Verfahren nach einem der Ansprüche 12 bis 14, **dadurch gekennzeichnet, dass** die Austrittskante (6) im Bereich der Schaufelstirn gegenüber einer ebenen Austrittskante (3) angehoben wird.

**16.** Verfahren nach einem der Ansprüche 12 bis 15, **dadurch gekennzeichnet, dass** die Austrittskante (6) zumindest abschnittsweise konvex gekrümmt wird.

**17.** Verfahren nach einem der Ansprüche 12 bis 16, **dadurch gekennzeichnet, dass** der optimale Austrittwinkelverlauf ($\varepsilon_3$) anhand von numerischen, fluiddynamischen und/oder mathematischen Modellen berechnet wird.

**18.** Verfahren nach einem der Ansprüche 12 bis 17, **dadurch gekennzeichnet, dass** der optimale Austrittwinkelverlauf ($\varepsilon_3$) in Modellversuchen ermittelt wird.

**Claims**

**1.** Pelton bucket (1) of a Pelton wheel, **characterized by** the exit edge (6) of the Pelton wheel being concavely curved at least partially, wherein the concave curve is defined such that the centre of its curvature is located above the exit edge (6) in a side view of the Pelton bucket (1).

**2.** Pelton bucket (1) according to Claim 1, **characterized by** the exit edge (6) of the Pelton bucket (1) being lowered in the region of the mean circular jet diameter ($D_1$) by comparison with a flat exit edge (3).

**3.** Pelton bucket (1) according to Claim 1 or 2, **characterized by** the exit edge (6) of the Pelton bucket (1) being raised in the region of the cup base by comparison with a flat exit edge (3).

**4.** Pelton bucket (1) according to Claim 1, 2 or 3, **characterized by** the exit edge (6) of the Pelton bucket (1) being raised in the region of the cup front by comparison with a flat exit edge (3).

**5.** Pelton bucket (1) according to one of the Claims 1 to 4, **characterized by** the curvature of the exit edge (6) being at least partially convexly curved.

**6.** Pelton bucket (1) according to one of the Claims 1 to 5, **characterized by** the concavely and/or the convexly curved shape being approximated at least partially defined by a polygon (7).

**7.** Pelton bucket (1) according to one of the Claims 1 to 6, **characterized by** the outflow angle ($\varepsilon_3$) of the jet at the Pelton bucket (1) being adaptable by the shape of the exit edge (6) such that the radial component of the exit speed ($C_{3r}$) of the jet is minimized.

**8.** Pelton bucket (1) according to one of the Claims 1 to 7, **characterized by** the outflow angle ($\varepsilon_3$) at the Pelton bucket (1) being adaptable by the shape of the exit edge (6) such that the deflection of the jet is maximized with reference to 180° at least partially.

**9.** Pelton bucket (1) according to one of the Claims 1 to 8, **characterized by** the optimum angle profile of the flow at the exit edge (6) being calculable with the aid of numerical, fluid dynamic and/or mathematical models.

**10.** Pelton bucket (1) according to one of the Claims 1 to 9, **characterized by** the optimum angle profile of the flow at the exit edge (6) being definable in model trials.

**11.** Pelton bucket (1) according to Claims 9 or 10, **characterized by** the angle profile of the flow at the exit edge (6) at the Pelton bucket (1) being adaptable such that upon exiting from the Pelton bucket (1) the jet only partially grazes the subsequent Pelton bucket (1).

**12.** Method for manufacturing a Pelton bucket (1), **characterized by** the exit edge (6) of the Pelton bucket (1) being concavely curved at least partially.

**13.** Method according to Claim 12, **characterized by** the exit edge (6) being lowered in the region of the mean circular jet diameter ($D_1$) by comparison with a flat exit edge (3).

14. Method according to Claim 12 or 13, **characterized by** the exit edge (6) being raised in the region of the cup base by comparison with a flat exit edge (3).

15. Method according to one of Claims 12 to 14, **characterized by** the exit edge (6) being raised in the region of the cup front by comparison with a flat exit edge (3).

16. Method according to one of the Claims 12 to 15, **characterized by** the exit edge (6) being at least partially convexly curved.

17. Method according to one of the Claims 12 to 16, **characterized by** the optimum exit angle profile ($\varepsilon_3$) being calculable with the aid of numerical, fluid dynamic and/or mathematical models.

18. Method according to one of the Claims 12 to 17, **characterized by** the optimum exit angle profile ($\varepsilon_3$) being defined in model trials.

**Revendications**

1. Aube Pelton (1) d'une roue Pelton, **caractérisée en ce que** l'arête de sortie (6) de la roue Pelton est courbée de façon concave au moins partiellement, la courbure concave étant définie de sorte que, dans une vue de côté de l'aube Pelton (1), son centre de courbure soit placé au-dessus de l'arête de sortie (6).

2. Aube Pelton (1) selon la revendication 1, **caractérisée en ce que** l'arête de sortie (6) de l'aube Pelton (1) est abaissée au niveau du diamètre circulaire moyen de jet ($D_1$) par rapport à une arête plate (3).

3. Aube Pelton (1) selon la revendication 1 ou 2, **caractérisée en ce que** l'arête de sortie (6) de l'aube Pelton (1) est relevée au niveau de la base de l'aube par rapport à une arête plate (3).

4. Aube Pelton (1) selon la revendication 1, 2 ou 3, **caractérisée en ce que** l'arête de sortie (6) de l'aube Pelton (1) est relevée au niveau du front de l'aube par rapport à une arête plate (3).

5. Aube Pelton (1) selon l'une des revendications 1 à 4, **caractérisée en ce que** la courbure de l'arête de sortie (6) est courbée de façon convexe au moins partiellement.

6. Aube Pelton (1) selon l'une des revendications 1 à 5, **caractérisée en ce que** la forme courbée de façon concave et/ou convexe est approximée au moins partiellement par un polygone (7).

7. Aube Pelton (1) selon l'une des revendications 1 à 6, **caractérisée en ce que** l'angle de décharge ($\varepsilon_3$) du jet à l'aube Pelton (1) est adaptable par la forme de l'arête de sortie (6), de sorte que la composante radiale de la vitesse de sortie ($C_{3r}$) du jet soit minimalisée.

8. Aube Pelton (1) selon l'une des revendications 1 à 7, **caractérisée en ce que** l'angle de sortie ($\varepsilon_3$) de l'aube Pelton (1) est adaptable par la forme de l'arête de sortie (6), de sorte que la déflexion du jet soit maximalisée en relation à 180° au moins partiellement.

9. Aube Pelton (1) selon l'une des revendications 1 à 8, **caractérisée en ce que** le profil optimal d'angle du courant à l'arête de sortie (6) peut être calculé à l'aide de modèles numériques, de dynamique de fluides, et/ou mathématiques.

10. Aube Pelton (1) selon l'une des revendications 1 à 9, **caractérisée en ce que** le profil optimal de l'angle du courant à l'arête de sortie (6) peut être déterminé par des essais sur un banc d'essai.

11. Aube Pelton (1) selon la revendication 9 ou 10, **caractérisée en ce que** le profil de l'angle du courant à l'arête de sortie (6) sur l'aube Pelton (1) est adaptable de sorte qu'en sortant de l'aube Pelton (1), le jet n'effleure l'aube Pelton (1) postérieure que partiellement.

12. Méthode de fabrication d'une aube Pelton (1), **caractérisée en ce que** l'arête de sortie (6) de l'aube Pelton (1) est courbée de façon concave au moins partiellement.

13. Méthode selon la revendication 12, **caractérisée en ce que** l'arête de sortie (6) est abaissée, au niveau du diamètre circulaire moyen de jet ($D_1$), par rapport à une arête plate (3).

14. Méthode selon la revendication 12 ou 13, **caractérisée en ce que** l'arête de sortie (6) est relevée, au niveau de la base de l'aube, par rapport à une arête plate (3).

15. Méthode selon l'une des revendications 12 à 14, **caractérisée en ce que** l'arête de sortie (6) est relevée, au niveau du front de l'aube, par rapport à une arête plate (3).

16. Méthode selon l'une des revendications 12 à 15, **caractérisée en ce que** l'arête de sortie (6) est courbée de façon convexe au moins partiellement.

**17.** Méthode selon l'une des revendications 12 à 16, **caractérisée en ce que** le profil optimal d'angle de sortie ($\varepsilon_3$) est calculé à l'aide de modèles numériques, de dynamique de fluides, et/ou mathématiques.

**18.** Méthode selon l'une des revendications 12 à 17, **caractérisée en ce que** le profil optimal d'angle de sortie ($\varepsilon_3$) est déterminé par des essais sur un banc d'essai.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3938356 A